(19) Europäisches Patentamt / European Patent Office / Office européen des brevets

(11) **EP 2 912 488 B1**

(12) **EUROPEAN PATENT SPECIFICATION**

(45) Date of publication and mention
of the grant of the patent:
**11.12.2019 Bulletin 2019/50**

(21) Application number: **13766262.3**

(22) Date of filing: **18.09.2013**

(51) Int Cl.:
***G01S 7/02*** *(2006.01)*          ***G01S 13/93*** *(2006.01)*

(86) International application number:
**PCT/EP2013/069365**

(87) International publication number:
**WO 2014/063867 (01.05.2014 Gazette 2014/18)**

(54) **METHOD FOR DETECTING INTERFERENCE IN A RECEIVED SIGNAL OF A RADAR SENSOR, DRIVER ASSISTANCE DEVICE AND MOTOR VEHICLE**

VERFAHREN ZUR DETEKTION VON STÖRUNGEN IN EINEM EMPFANGSSIGNAL EINES RADARSENSORS, FAHRERASSISTENZVORRICHTUNG UND KRAFTFAHRZEUG

PROCÉDÉ DE DÉTECTION DES INTERFÉRENCES DANS UN SIGNAL REÇU PROVENANT D'UN CAPTEUR RADAR, DISPOSITIF D'AIDE À LA CONDUITE ET VÉHICULE À MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2012 DE 102012021239**

(43) Date of publication of application:
**02.09.2015 Bulletin 2015/36**

(73) Proprietor: **Valeo Schalter und Sensoren GmbH
74321 Bietigheim-Bissingen (DE)**

(72) Inventor: **OSSOWSKA, Alicja
75177 Pforzheim (DE)**

(74) Representative: **Withopf, Kristina et al
Valeo Schalter und Sensoren GmbH
CDA-IP
Laiernstraße 12
74321 Bietigheim-Bissingen (DE)**

(56) References cited:
**US-A- 6 094 160          US-A1- 2006 125 682
US-A1- 2008 231 497**

**Description**

The invention relates to a method for detecting interference in a received signal received by a radar sensor of a motor vehicle by means of an electronic computing device. For detecting a target object in an environment of the motor vehicle, a transmit signal is emitted by means of the radar sensor, which includes a sequence of consecutive frequency-modulated chirp signals. Then, the radar sensor receives an echo signal reflected on the target object as the received signal with the superimposed interference. After receiving the received signal, the interference in the chirp signals of the received signal is detected. In addition, the invention relates to a driver assistance device for a motor vehicle as well as to a motor vehicle with such a device.

Automotive radar sensors are already prior art and are for example operated at a frequency of ca. 24 GHz or ca. 79 GHz. Radar sensors generally serve for detecting target objects in the environment of the motor vehicle and support the driver in driving the motor vehicle in various manner. On the one hand, radar sensors measure the distance between the target object and the vehicle. On the other hand, they also measure both the relative velocity to the target object and the so-called target angle, i.e. an angle between an imagined connecting line to the target object and a reference line, for instance the vehicle longitudinal axis.

Radar sensors are usually placed behind the bumper, for example in the respective corner regions of the bumper. For detecting the target object, the radar sensor emits a transmit signal (electromagnetic waves), which is then reflected on the target object to be detected and received by the radar sensor as radar echo. Therein, the interest is directed to the so-called "frequency modulated continuous wave radar" or "FMCW radar", in which the emitted signal includes a sequence (burst) of frequency-modulated chirp signals, which are emitted one after the other. Correspondingly, the received signal of the radar sensor also includes such a plurality of chirp signals, which are processed and evaluated with regard to the above mentioned measured variables. Therein, the received signal is first mixed down to the baseband and subsequently converted into a digital received signal with a plurality of samples by means of an analog-digital converter. The samples of the received signal are then processed by means of an electronic computing device (digital signal processor), which can be integrated in the radar sensor.

With a radar sensor, typically, a relatively wide azimuth angle range is covered in horizontal direction, which can even be 150°. Thus, the radar sensor has a relatively large azimuth detection angle such that the field of view or the detection range of the radar sensor in azimuth direction is correspondingly wide. The azimuth detection angle is usually symmetrical with respect to a radar axis extending perpendicularly to the front sensor area such that the azimuth detection angle is dimensioned from for example -75° to +75° with respect to the radar axis. This azimuth detection range can be divided in smaller partial ranges, which are irradiated one after the other by the radar sensor. For this purpose, for example, the main lobe of the transmitting antenna is electronically pivoted in azimuth direction, for example according to the phase array principle. In this case, the receiving antenna can have a receive characteristic in azimuth direction, with which the entire azimuth detection range is covered. Such a radar sensor is for example known from the document DE 10 2009 057 191 A1.

With such a wide azimuth detection range of the radar sensor, it can prove problematic that the radar sensor is exposed to various interference signals, which originate from different spatial directions and are superimposed on the received signal of the radar sensor. The received signal of the radar sensor thus includes not only the useful signal (the reflected transmit signal), but also interference, which optionally can falsify the detection of the target object. This interference is to be detected and suppressed, in particular completely filtered out of the received signal, in the radar sensor.

Various methods are already known from the prior art, which serve for detecting the interference in a received signal of a radar sensor. Such methods are for example known from the printed matters US 2006/0125682 A1, US 6 094 160 A as well as US 6 121 918 A. However, all of these methods relate to the detection and suppression of the interference in a single chirp signal. However, if the entire chirp signal is affected by interference, thus, detection and suppression of the interference in the chirp signal are often not possible.

From the document US 2011/0291875 A1, a method for improving the performance of an FMCW radar system is known.

In US 6,094,160, an interference rejection method for an automotive radar system is disclosed. According to this method, a sliding window of samples is analyzed to determine a sample variance.

The published patent application US 2008/0231497 A1 discloses a method for detecting interference in a radar system.

An object of the invention is to demonstrate a solution, how in a method of the initially mentioned kind, in which the radar sensor emits a temporal sequence of frequency-modulated chirp signals, the interference in the received signal - in particular in the respective chirp signals of the received signal - can be particularly reliably detected.

According to the invention, this object is solved by a method, by a driver assistance device as well as by a motor vehicle having the features according to the respective independent claims. Advantageous implementations of the invention are the subject matter of the dependent claims, of the description and of the figures.

A method according to the invention serves for detecting interference in a received signal received by a radar sensor of a motor vehicle by means of an electronic computing device of the motor vehicle, which can for example also be integrated in the radar sensor. For detecting a target object in the environment of the motor vehicle, the radar sensor emits a transmit signal, which includes a sequence of consecutive frequency-modulated chirp signals. The transmit signal then reflects on the target object and again arrives at the radar sensor in the form of an echo signal. The radar sensor receives the echo signal as the received signal with the superimposed interference. After receiving the received signal, the interference in the chirp signals of the received signal is detected, namely, by means of the electronic computing device. For detecting the interference within a subset of samples of a chirp signal of the received signal, a parameter value is determined, which characterizes a deviation of the samples of the subset from each other. Depending on the parameter value, then, at least with respect to one of the samples of the subset it is determined whether or not this sample is affected by interference.

For detection of the interference within a subset of samples of a single chirp signal, thus, a parameter value is determined, which characterizes a measure of the deviation of the samples from each other and therefore a measure of the dispersion of the samples of this subset. Such a parameter value therefore allows unique conclusion to the interference within the examined subset of samples. Therein, the invention is based on the realization that a subset of adjacent samples of a received chirp signal basically is to exhibit only a dispersion of the samples with respect to each other, which is comparatively low. If a greater dispersion is detected, thus, this means that the examined subset of samples is affected by an interference signal. By determining the parameter value, thus, it can be determined whether the samples of the examined subset are free of interference or else affected by interference without much computational effort and additionally particularly fast and reliably. Therein, the samples of the subset are preferably consecutive and therefore adjacent samples of the chirp signal.

Preferably, the detection of the interference in a single sample of a chirp signal is effected in binary manner. This means that a sample can be interpreted either as free of interference or else as affected by interference. If this binary decision is made with respect to all of the samples of the received signal - and thus all of the samples of the entire sequence of chirp signals - thus, an interference matrix can be generated, in which it is indicated which samples are affected by interference and which are not. In such an interference matrix, each line of the matrix can respectively be associated with a different chirp signal. In the first line of the interference matrix, it can be indicated whether or not the individual samples of a first chirp signal of the received sequence are affected by interference. Therefore, the first line of the interference matrix is associated with the first chirp signal of the sequence. The second line of the interference matrix can be associated with the second received chirp signal etc.

The detection of the interference in the respective chirp signals is preferably effected in the time domain. The received signal including the sequence of chirp signals is preferably first mixed down to the baseband by means of a mixer and then converted to a digital received signal with the aid of an analog-digital converter. The computing device then processes the samples of the individual chirp signals and evaluates them with regard to the interference. From the received chirp signals of the same sequence, a receive matrix can be provided, in which the samples of the chirp signals of the received signal are indicated. In the first line, the samples of the first received chirp signal can be indicated, in the second line the samples of the second chirp signal etc. The computing device can then process such a receive matrix.

Preferably, a local variance of the samples within the subset is determined as the parameter value. Then, depending on the variance, it can be determined whether or not the at least one sample of the subset is affected by interference. Therein, the variance represents a very precise measure of the dispersion of the samples within the subset. Based on the local variance, thus, it can be particularly precisely detected whether or not at least one of the samples within the subset is affected by an interference signal.

Preferably, the determined parameter value is compared to a first threshold value. The at least one sample of the subset can be interpreted as affected by interference if the parameter value is greater than the first threshold value. This embodiment can be implemented without much effort and allows fast verification of the samples of the subset for interference.

It proves particularly advantageous if the first threshold value is dynamically and adaptively adjusted by means of the computing device in the operation of the radar sensor. In this manner, the first threshold value can be adapted to very different situations or scenarios such that for different types of the environment of the vehicle and thus for different propagation characteristics of the electromagnetic waves, an optimum threshold value can also be respectively adjusted. Namely, different dispersions of the samples in different environments each arise: in an open environment, in dense traffic and for example in a tunnel. Independently of the current scenario, thus, the interference can respectively be particularly reliably detected because the first threshold value can be adapted to the different scenarios in the operation. Therein, the adjustment of the first threshold value can be performed depending on the received signal itself. This in particular means that the level of the first threshold value is adjusted depending on the power of the received signal. Namely, the received signal is greatly affected by the current type of the environment and thus by the propagation of the electromagnetic waves and therefore constitutes a reliable and realistic basis for the adjustment of the first threshold value.

Preferably, therein, the first threshold value is adjusted depending on the samples of the currently examined subset. In particular, the determined parameter value itself is here used for adjusting the first threshold value. Thus, the first parameter value is adjusted depending on the dispersion of the samples within the examined subset. Thus, the first threshold value is also dependent on the respective environment and therefore also dependent on the interference within the examined subset. The first threshold value is therefore respectively optimally adjusted depending on requirement and appropriate to the situation.

Preferably, the alteration of the currently adjusted first threshold value is effected only on condition that the parameter value is smaller than the currently adjusted first threshold value. The adaption of the first threshold value is therefore only effected if interference is not detected within the currently examined subset of samples. Accordingly, the adjustment of the threshold value is only effected if the currently examined samples are free of interference such that the first threshold value cannot be adversely affected by interference.

The alteration of the currently adjusted first threshold value is preferably also effected only on condition that the parameter value is smaller than a second threshold value, which is smaller than the first threshold value. If this condition is satisfied, thus, this can be an indication that the currently adjusted threshold value is for example too small.

Preferably, therein, the second threshold value is also "online" or adaptively adjusted in the operation of the radar sensor. Therein, the second threshold value too can be adjusted depending on the received signal itself, preferably depending on the determined parameter value of the currently examined subset. Thus, the decision whether or not the first threshold value is to be currently altered is also effected considering the current scenario.

Preferably, the two threshold values are adjusted depending on a common intermediate value, for example by multiplication of the intermediate value respectively by a different variable or constant. Thus, the alteration of the first threshold value is synchronized in time with the alteration of the second threshold value because only the intermediate value can be adjusted in the operation and this alteration of the intermediate value also automatically results in alteration of the two threshold values. The alteration of the first and the second threshold value is therefore simultaneously and proportionally effected. In addition, this embodiment also has the advantage that only the intermediate value alone has to be adapted in the operation and the computational effort is therefore reduced because the two threshold values do not have to be adapted separately from each other.

It can also be provided that different partial ranges of an entire azimuthal field of view of the radar sensor are irradiated and detected one after the other by the radar sensor. The first threshold value and in particular the intermediate value can then be individually and separately adjusted for each one of the partial ranges. Thus, for each one of the partial ranges, a different first threshold value is respectively given. This embodiment is based on the fact that also for different partial ranges of the entire azimuthal field of view of the radar sensor, different propagation characteristics of the electromagnetic waves can respectively appear and in addition different interference sources can respectively exist, which each differently affect the different partial ranges.

The above described method is preferably applied to a plurality of subsets of samples of the chirp signal and/or to a plurality of chirp signals of the same sequence, in particular to all of the chirp signals of the same sequence. For a plurality of samples of the received signal, thus, it can respectively be individually determined whether or not these samples are affected by interference.

The invention also relates to a driver assistance device for a motor vehicle including an automotive radar sensor as well as an electronic computing device. The computing device can also be integrated in the radar sensor. For detection of a target object in an environment of the motor vehicle, the radar sensor is formed for emitting a transmit signal including a sequence of consecutive frequency-modulated chirp signals and for receiving an echo signal reflected on the target object as the received signal with a superimposed interference. The computing device is adapted to detect the interference in the chirp signals of the received signal. The computing device is adapted to perform a method according to the invention.

A motor vehicle according to the invention includes a driver assistance device according to the invention.

The preferred embodiments presented with respect to the method according to the invention and the advantages thereof correspondingly apply to the driver assistance device according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on individual preferred embodiments as well as with reference to the attached drawings.

There show:

Fig. 1      in schematic illustration a motor vehicle with a driver assistance device according to an embodiment of the invention;

Fig. 2    an exemplary receive matrix of a radar sensor with a sequence of chirp signals, wherein the lines of the receive matrix each include all of the samples of a single chirp signal;

Fig. 3    a flow diagram or block diagram of a method according to an embodiment of the invention for detecting interference in the received signal;

Fig. 4    temporal progresses of a total of nine chirp signals of a received signal of the radar sensor, wherein a temporal progress of the interference is presented to each chirp signal; and

Fig. 5-7    an exemplary interference matrix, respectively, in which the position of the interferences in the received signal (in the receive matrix) is identified with positive integers.

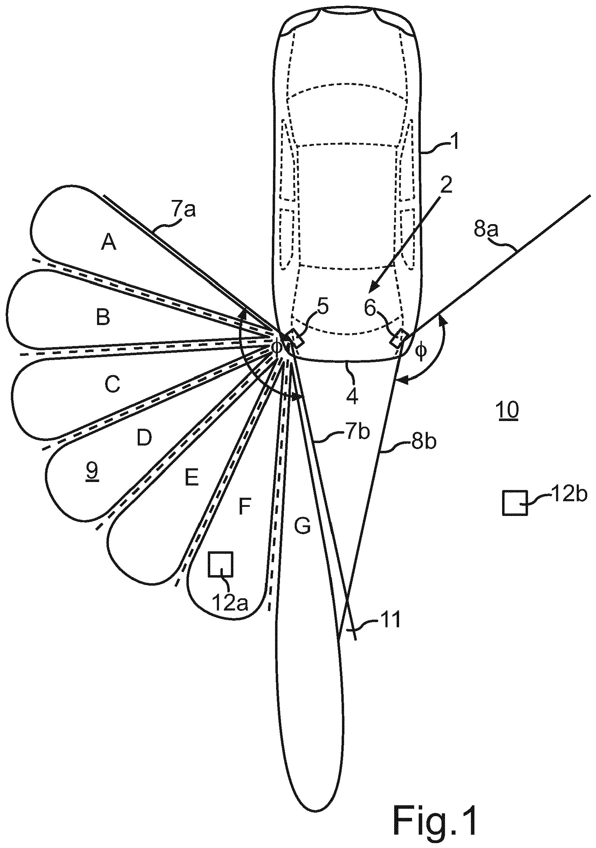

A motor vehicle 1 illustrated in Fig. 1 is for example a passenger car. The motor vehicle 1 includes a driver assistance device 2 assisting the driver in driving the motor vehicle 1. For example, it can be a blind spot warning and/or a lane change assist and/or a cross traffic alert and/or a door opening assist and/or a rear pre-crash.

Two radar sensors 5, 6 are associated with the driver assistance device 2, which are disposed behind a rear bumper 4 of the motor vehicle 1. The first radar sensor 5 is disposed in a left rear corner region of the motor vehicle 1, while the second radar sensor 6 is disposed in a right rear corner region. Both radar sensors 5, 6 are located behind the bumper 4 and are therefore not visible from the outside of the motor vehicle 1.

The radar sensors 5, 6 are frequency-modulated continuous wave radar sensors (FMCW) in the embodiment. The radar sensors 5, 6 each have an azimuth detection range $\phi$, which is bounded by two lines 7a, 7b (for the left radar sensor 5) and 8a, 8b (for the right radar sensor 6), respectively, in Fig. 1. The azimuth detection angle $\phi$ is for example 150°. By this angle $\phi$, a field of view 9 and 10, respectively, of the respective radar sensor 5, 6 in azimuth direction and thus in horizontal direction is respectively defined. The fields of view 9, 10 can also overlap each other such that an overlap region 11 exists.

Each radar sensor 5, 6 includes an integrated computing device for example in the form of a digital signal processor, which drives the radar sensor 5, 6 and additionally processes and evaluates the received signals. However, alternatively, an external computing device common to the two sensors 5, 6 can also be provided, which is able to then process the received signals of the two sensors 5, 6.

In their respective fields of view 9, 10, the radar sensors 5, 6 can detect target objects 12a (on the left) and 12b (on the right) external to vehicle. In particular, the radar sensors 5, 6 can determine the distance of the target objects 12a and 12b, respectively, from the respective radar sensor 5, 6 as well as respectively the target angle and the relative velocity of the target objects 12a and 12b, respectively, with respect to the motor vehicle 1 - they are measured variables of the radar sensors 5, 6.

With further reference to Fig. 1, the radar sensor 5 - and analogously also the sensor 6 - can successively irradiate various partial ranges A, B, C, D, E, F, G of the azimuthal field of view 9. These partial ranges A to G represent angular ranges, wherein for successively covering the partial ranges A to G for example a transmit lobe of the transmitting antenna of the radar sensor 5 is electronically pivoted in azimuth direction, namely according to the phase array principle. The different orientations of the transmit lobe are schematically indicated for the different partial ranges A to G in Fig. 1. The receiving antennas of the radar sensor 5 can overall have a wide receive characteristic in azimuth direction, with which the entire azimuthal field of view 9 is covered. Other configurations can alternatively realize narrow reception angle ranges in association with wide transmit lobes.

In Fig. 1, for the sake of clarity, only the partial ranges A to G of the field of view 9 of the first radar sensor 5 are illustrated. However, correspondingly, the horizontal field of view 10 of the second radar sensor 6 is here also divided in multiple partial ranges. Although the further description relates to the mode of operation of the first sensor 5, the mode of operation of the second sensor 6 corresponds to that of the first sensor 5.

The number of the partial ranges A to G is only exemplarily illustrated in Fig. 1 and can be different according to embodiment. In the embodiment, a total of seven partial ranges A to G is provided, which are illuminated one after the other by the radar sensor 5.

The mode of operation of the radar sensor 5 is as follows: in a single measurement cycle of the radar sensor 5, the main lobe of the transmitting antenna is once stepwise pivoted from the partial range A up to the partial range G, such that the partial ranges A to G are illuminated one after the other. Therein, for each partial range A to G, a temporal sequence of frequency-modulated chirp signals (chirps) is respectively emitted. First, such a sequence of chirp signals is emitted for the partial range A. After a preset transmission pause, then, a sequence of chirp signals is emitted to the partial range B. After a further preset transmission pause, then, the partial range C is irradiated etc. As is apparent from Fig. 1, the radar sensor 5 has a larger reach for the partial range G than for the remaining partial ranges A to F. This is achieved in that the emitted sequence has more chirp signals for the partial range G than for the remaining ranges A to F. While for example 16 chirp signals are emitted within the respective sequence for the partial ranges A to F, for example a total of 64 chirp signals within the sequence is emitted for the partial range G.

The detection of the target objects 12a, 12b is therefore individually and separately effected for each partial range A to G. Thus, it is possible to track the target objects 12a, 12b in the entire field of view 9, 10.

In a single measurement cycle of the radar sensor 5, thus, in the embodiment, a total of seven sequences of frequency-modulated chirp signals is emitted, namely a sequence of 16 chirp signals for the partial ranges A to F respectively as well as a sequence of 64 chirp signals for the partial range G. Correspondingly, the received signals also each include a plurality of chirp signals. The received signal for the partial range A includes - if reflection on a target object occurs - 16 chirp signals; the received signal for the partial range B also includes 16 chirp signals, and the respective received signals for the partial ranges C to F also each include 16 chirp signals. By contrast, the received signal from the partial range G includes 64 chirp signals.

However, the received signals of the radar sensor 5 do not only include useful signals from the target object, but are also affected by interference signals. Such interference signals superimposed on the received signal can for example originate from the other radar sensor 6 or else from extraneous sources external to vehicle, such as for example from sensors of other vehicles or the like. These interferences are now detected and suppressed or filtered out in the received signal of the radar sensor 5.

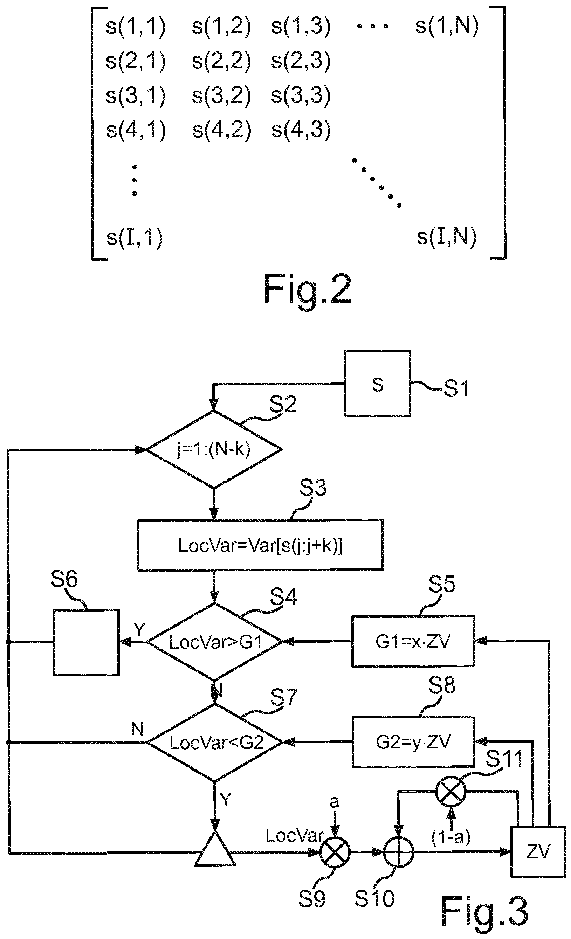

Therein, the detection and/or the suppression of the interference are effected separately and individually for each partial range A to G. This means that the respective received signals from the partial ranges A to G are processed and evaluated separately from each other. An exemplary receive matrix provided based on a received signal for one of the partial ranges A to G (e.g. for the partial range A) is illustrated in Fig. 2. For generating the receive matrix, the received signal including the plurality of chirp signals (e.g. 16 chirp signals) is mixed down to the baseband and sampled with the aid of an analog-digital converter .The samples of a single chirp signal are then combined in a common line of the receive matrix such that each line of the receive matrix includes the samples of an entire single chirp signal. In the first line, thus, the samples of the first chirp signal are indicated, in the second line, the samples of the second chirp signal etc. Therein, N denotes the number of the samples within a chirp signal, wherein for example it applies: N = 256. By contrast, I denotes the number of the chirp signals within the sequence. As already explained, depending on the partial range A to G, it can apply: I = 16 or I = 64. The samples of the received signal are denoted by s(i,n).

For each received signal - and thus for each receive matrix - the interference is individually detected and suppressed. The interference is also detected and suppressed individually for each chirp signal within the receive matrix and thus individually for each line of the receive matrix. Below, two different methods for detecting the interference are described. In the operation of the radar sensor 5 (and also of the radar sensor 6 separately) at least one of the two methods is thereby applied. Advantageously, the two methods can also be combined with each other and the results then be compared to each other and thus made plausible.

According to the first method, the interference in a certain chirp signal (a certain line of the receive matrix) is detected in the manner that the samples of this chirp signal are each individually compared to a sample of an adjacent, in particular of an immediately succeeding chirp signal. Therein, the comparison is effected between each two samples of adjacent chirp signals, which (the samples) have the same row position (index n) within the respective row of samples. For this purpose, a difference between the two samples is determined, and then it is decided whether or not these two samples are affected by interference based on the amount of the difference. This decision is made in binary manner. This means that a sample can be interpreted either as free of interference or else as affected by interference.

According to the first method, for every other chirp signal (for every other line of the receive matrix) or for each chirp signal except for the last chirp signal, the following difference is each individually calculated for each sample of this chirp signal:

$$slope\left(i_{chirp}, n_{sample}\right) = \left|s\left(i_{chirp} + 1, n_{sample}\right) - s\left(i_{chirp}, n_{sample}\right)\right|,$$

wherein $i_{chirp}$ denotes the row position of the examined chirp signal within the sequence, $n_{sample}$ denotes the row position of the examined sample within the chirp signal, $slope(i_{chirp}, n_{sample})$ denotes the amount of the difference and $s(i_{chirp}, n_{sample})$ denotes the samples of the received signal. The computing device of the radar sensor 5 then checks for each sample whether the amount of the difference is greater than a preset limit value. If the amount of the difference is greater than the limit value, the two samples $s(i_{chirp} + 1, n_{sample})$ as well as $s(i_{chirp}, n_{sample})$ are interpreted as affected by interference.

For each sample of the receive matrix, thus, it can be checked whether or not this sample is affected by interference.

The second method for detecting the interference is now explained in more detail with reference to Fig. 3: In a first step S1, the receive matrix s with samples is provided. Each line of the receive matrix s is then separately processed one after the other. In a following second step S2, a counter value j is implemented, which is incremented, thus respectively increased by one, from 1 to N-k. Therein, N denotes the number of the samples within a line of the receive matrix and is for example equal to 256, while k is a preset constant and for example it applies: k=4.

In a further step S3, first, a subset of samples s(j:j+k) within the examined line is defined. Thus, the subset can include a total of five samples, namely five immediately consecutive samples of the same line of the receive matrix and therefore of the same chirp signal. Based on this subset of samples s(j:j+k), then, a parameter value is determined, which characterizes a deviation of these samples s(j) to s(j+k) from each other and thus a dispersion of the samples within the examined subset. In the embodiment, the local variance LocVar of these samples s(j) to s(j+k) is determined as the parameter value.

In a following step S4, the computing device checks whether the parameter value LocVar is greater than a first threshold value G1. This first threshold value G1 is calculated from an intermediate value ZV by multiplication of this intermediate value ZV by a variable x in step S5. The variable x can for example be set to 11.

If the check in step S4 reveals that the parameter value LocVar is greater than the threshold value G1, thus, the method proceeds to a step S6, in which the following is implemented: first, one of the samples, in particular the sample s(j+2), is interpreted as affected by interference and identified as such. If the preceding sample, in particular the sample s(j+1), of the same line was not identified as affected by interference and additionally the second preceding sample, in particular the sample s(j), was identified as affected by interference, the immediately preceding sample (s(j+1)) is also interpreted as affected by interference and identified as such. The method then returns to step S2, in which the counter value j is incremented.

If the check in step S4 reveals that the parameter value LocVar is smaller than the first threshold value G1, thus, the method proceeds to a further step S7, in which is it checked by the computing device whether or not the intermediate value ZV is to be adapted and thus to be set to a new value. To this, the parameter value LocVar is compared to a second threshold value G2. If the parameter value LocVar is greater than the second threshold value G2, thus, the method returns to step S2, in which the counter value j is incremented. However, if the parameter value LocVar is smaller than the second threshold value G2, thus, the intermediate value ZV is adapted.

The second threshold value G2, too, is calculated immediately from the intermediate value ZV, namely by multiplication of the intermediate value ZV by a constant y according to step S8. This constant y is smaller than the constant x and is for example 3. Both values x, y can optionally also be variably set and thus be varied in operation.

The first threshold value G1 is therefore greater than the second threshold value G2. Since the threshold values G1 and G2 are directly calculated from the intermediate value ZV, the adaptation of the two threshold values G1 and G2 is effected at the same time by variation of the intermediate value ZV. This means that the two threshold values G1, G2 are varied synchronously and proportionally to each other.

If it is determined in step S7 that the parameter value LocVar is smaller than the second threshold value G2, thus, the adaptation of the intermediate value ZV is effected on the one hand and the method also returns to step S2 on the other hand. The adaptation of the intermediate value ZV is configured as follows:

For the calculation of the new intermediate value ZV, a constant a is defined, which can for example be 0.0000075. In step S9, the parameter value LocVar is multiplied by the constant a, and the result of this multiplication is supplied to an addition in step S10. The result of a multiplication of the current intermediate value ZV by the factor (1-a) is supplied to this addition as the second addend, which is performed in step S11. The new intermediate value therefore results from the following equation:

$$ZV = a \cdot LocVar + (1-a) \cdot ZV',$$

wherein ZV denotes the new intermediate value and ZV' denotes the previous intermediate value.

The intermediate value ZV and thus the threshold values G1 and G2 are therefore dynamically adjusted in the operation of the radar sensor 5, 6. This adjustment is preferably individually effected for each partial range A to G of the field of view 9, 10 of the radar sensor 5, 6.

If the interference in the subset of samples s(j:j+k) is detected in step S4 and j=1 (beginning of the chirp signal), thus, all of the samples s(1) to s(1+k) are interpreted as affected by interference and identified as such. At the end of the examined chirp signal too, if j=N-k (e.g. 251) and the interference is detected in step S4 (LocVar > G1), all of the samples of this subset s(N-k) to s(N) are interpreted as affected by interference and identified as such.

In case between two samples s(j) and s(j+2) identified as affected by interference, there is a sample s(j+1), in which interference is not detected, it is provided that this sample s(j+1) too is (re)interpreted as affected by interference.

Optionally, the values x and/or y and/or a can be adjusted individually for each partial range A to G.

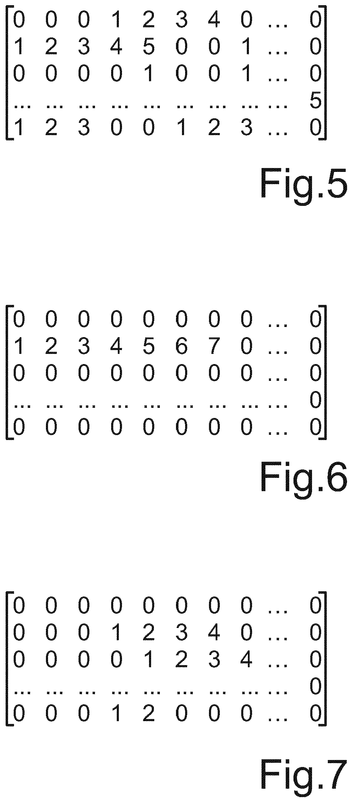

Independently of the used method for detecting the interference, an interference matrix is generated as a result, in which it is separately specified to each sample, whether or not the interference has been detected in this sample. An exemplary interference matrix is illustrated in Fig. 5. Therein, the size of the interference matrix corresponds to the size of the receive matrix, wherein the samples affected by interference are designated by integers greater than zero. The samples, in which interference was not detected, are marked with "0". The samples within a common line, in which interference was detected and which are associated with one and the same interference, are provided with serial numbers. The sample at the beginning of the interference is marked with "1", the next sample with "2", the further sample with "3" etc. up to the next sample, in which interference was not detected. The last sample of an interference is therefore marked with a number, which corresponds to the length of the interference, wherein the length of the interference is indicated by the number of the samples affected by interference. The distance between two interferences within a chirp signal tolerates at least two samples. If a distance of a single sample between two interferences is detected, thus, this sample is also marked as affected by interference and the two interferences are combined.

In the example according to Fig. 5, accordingly, interference from the fourth sample of the first chirp signal is detected, wherein the length of this interference is four samples. In two of the chirp signals, two interferences are respectively detected, wherein one of the interferences directly begins at the first sample.

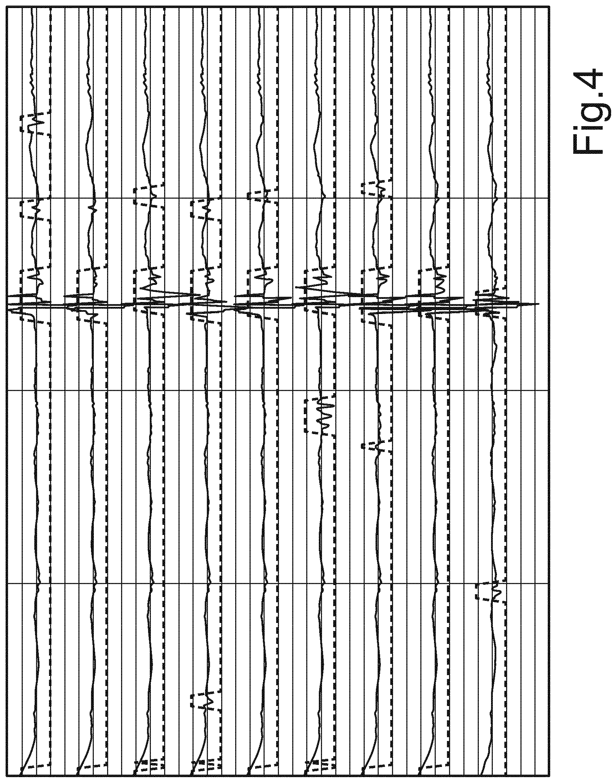

In Fig. 4, temporal progresses of chirp signals of a received signal are illustrated (solid lines). The progress of the detected interferences (dashed lines) is also presented to each chirp signal. As is apparent from Fig. 4, the decision is binary: either interference is detected in a certain sample or interference is not detected.

If the interference matrix is present, thus, the interference in the received signal (in the receive matrix) can be suppressed. Therein, in the computing device of the radar sensor 5, a total of three different signal correction algorithms is stored, which serve for removing the interference from the received signal. For each chirp signal and thus for each line of the receive matrix, therein, the optimum signal correction algorithm is respectively individually selected in order to suppress the interference within this chirp signal. Therein, the selection is effected depending on the detected interference and in particular depending on the position of the interference within the respective chirp signal, depending on the position of the chirp signal within the sequence and/or depending on the length of the detected interference. The selection can also be effected individually for each detected interference.

In the embodiment, the following three signal correction algorithms are stored in the computing device:

First algorithm: according to this first algorithm, interpolation of the samples affected by interference over the immediately adjacent chirp signals is proposed. Therein, the interpolation is effected column by column in the receive matrix. The sample of a chirp signal affected by interference is replaced with an interpolated value, which is calculated by linear interpolation of samples, which have the same row number (row position) in the respective immediately adjacent chirp signals.

Second algorithm: according to this second algorithm, interpolation within a certain chirp signal is performed, the samples of which are affected by interference. Here, the linear interpolation is effected based on basic values, which are located on the two sides of samples affected by interference. Therein, at least two basic values can be assumed respectively on the two sides, which are free of interference. However, if the interference is detected at the beginning of a chirp signal, as it is for example illustrated in Fig. 5 in the second line of samples, thus, on the left side of the interfered samples, a constant, preset value can be defined as the basic value for the interpolation.

Third algorithm: according to the third algorithm, the interfered samples are replaced with a preset, constant value.

The first algorithm is selected for the samples of a certain chirp signal whenever at least in the immediately adjacent chirp signals, at least those samples are free of interference, which have the same row position within the respective chirp signal. With respect to the receive matrix, this means that the first algorithm is selected whenever the immediately adjacent samples located in the same column are free of interference.

If the conditions for the first algorithm are not satisfied, thus, the second algorithm is selected. This second algorithm can also be selected only on condition that the length of the interference is smaller than a preset limit value, which can for example be 100 samples.

If the condition for the second algorithm either is not satisfied, thus, the third algorithm is selected.

In Fig. 6 and 7, exemplary interference matrices are illustrated. With the interference in the second line of the interference matrix according to Fig. 6, the first algorithm can be selected because the respectively (vertically) adjacent samples of the adjacent lines are free of interferences. The affected samples of the second line are therefore replaced with interpolated values, which are calculated by linear interpolation of the respective adjacent samples of the two adjacent lines.

In the interference matrix according to Fig. 7, for the interferences presented there, the second algorithm is respectively selected because the adjacent lines are also affected by interference or the interference is detected in the last line. Because the length of the interference is respectively smaller than 100, the second algorithm can be selected, in which the affected samples are replaced with interpolated values, which are calculated by linear interpolation of the adjacent samples of the same line.

By such an approach, the interference as it is exemplarily illustrated in Fig. 4 can be completely eliminated, and the chirp signals can be "smoothed". Thus, the detection of the target objects is also effected considerably more precisely and reliably.

**Claims**

1. Method for detecting interference in a received signal (s) received by a radar sensor (5, 6) of a motor vehicle (1) by means of an electronic computing device of the motor vehicle (1), wherein for detecting a target object (12) in an environment of the motor vehicle (1) a transmit signal including a sequence of consecutive frequency-modulated chirp signals is transmitted by means of the radar sensor (5, 6) and an echo signal reflected on the target object (12) is received by the radar sensor (5, 6) as the received signal (s) with the superimposed interference, wherein after receiving the received signal (s) by the radar sensor (5, 6), the interference in the chirp signals of the received signal (s) is detected, wherein from the received signals of the same sequence, a receive matrix is provided, in which the samples of the chirp signals of the received signal are indicated, wherein the lines of the receive matrix each include all the samples of a single chirp signal, wherein each line of the receive matrix is then processed one after the other:

   - wherein a value j is implemented, which is incremented from 1 to N-k, wherein N denotes the number of samples within a line of the receive matrix and k is a preset constant,
   - wherein for detecting the interference within a subset (s(j:j+k)) of samples of a chirp signal of the received signal (s) from j to j+k, a parameter value (LocVar) is determined, which characterizes a deviation of the samples of the subset (s(j:j+k)) from each other, wherein a local variance of the samples within the subset (s(j:j+k)) is determined as the parameter value (LocVar),
   - and that depending on the parameter value (LocVar) at least with respect to one of the samples of the subset (s(j:j+k)) it is determined whether or not this sample is affected by interference, wherein depending on the local variance it is determined whether or not the at least one sample of the subset (s(j:j+k)) is affected by interference, wherein the parameter value (LocVar) is compared to a first threshold value (G1),
   - at least one sample of the subset is interpreted as affected by the interference if the parameter value (LocVar) is greater than the first threshold value (G1),
   - **characterized by** the first threshold value (G1) and a second threshold value (G2) being adjusted in the operation of the radar sensor (5, 6) by means of the computing device, wherein the alteration of the currently adjusted first threshold value (G1) and second threshold value (G2) is effected on condition that the parameter value (LocVar) is smaller than the currently adjusted first threshold value (G1) and on condition that the parameter value (LocVar) is smaller than the second threshold value (G2), which is smaller than the first threshold value (G1).

2. Method according to claim 1,
   **characterized in that**
   the adjustment of the first threshold value (G1) in the operation is performed depending on the received signal (s).

3. Method according to one of the precedent claims,
   **characterized in that**
   the adjustment of the first threshold value (G1) in the operation is performed depending on the samples of the subset (s(j:j+k)).

4. Method according to one of the precedent claims,
   **characterized in that**
   the adjustment of the first threshold value (G1) in the operation is performed depending on the parameter value (LocVar).

5. Method according to one of the precedent claims,
   **characterized in that**
   the second threshold value (G2) too is adjusted in the operation of the radar sensor (5, 6) depending on the received signal (s), preferably depending on the parameter value (LocVar).

6. Method according to one of the preceding claims,
   **characterized in that**
   the two threshold values (G1, G2) are adjusted depending on a common intermediate value (ZV).

7. Method according to one of the preceding claims, **characterized in that** the first threshold value (G1) is calculated from an intermediate value (ZV) by multiplication of this intermediate value (ZV) by a variable (x).

8. Method according to one of the preceding claims, **characterized in that** the second threshold value (G2) is calculated from an intermediate value (ZV) by multiplication of this intermediate value (ZV) by a variable (y).

9. Method according to one of claims 6 to 8, **characterized in that** the new intermediate value results from the equation:

$$ZV = a \cdot LocVar + (1-a) \cdot ZV',$$

wherein ZV denotes the new intermediate value, ZV' denotes the previous intermediate value, LocVar denotes the local variance and a is a constant.

10. Method according to one of the precedent claims,
**characterized in that**
different partial ranges (A to G) of an entire azimuthal field of view (9, 10) of the radar sensor (5, 6) are detected one after the other by the radar sensor (5, 6) and the first threshold value (G1), in particular the intermediate value (ZV), is individually adjusted for each one of the partial ranges (A to G).

11. Method according to one of the preceding claims,
**characterized in that**
the method is applied to a plurality of subsets (s(j:j+k)) of samples of the chirp signal and/or to a plurality of chirp signals of the same sequence.

12. Driver assistance device (2) for a motor vehicle (1), including a radar sensor (5, 6) formed for emitting a transmit signal including a sequence of consecutive frequency-modulated chirp signals and for receiving an echo signal, said echo signal being reflected on a target object (12), as a received signal (s) with a superimposed interference for detecting the target object (12) in an environment of the motor vehicle (1), and including an electronic computing device adapted to detect the interference in the chirp signals of the received signal (s), wherein from the received signals of the same sequence, a receive matrix is provided, in which the samples of the chirp signals of the received signal are indicated, wherein the lines of the receive matrix each include all the samples of a single chirp signal, wherein each line of the receive matrix is then processed one after the other:

   - wherein a value j is implemented, which is incremented from 1 to N-k, wherein N denotes the number of samples within a line of the receive matrix and k is a preset constant,
   - wherein for detection of the interference within a subset (s(j:j+k)) of samples of a chirp signal of the received signal (s) from j to j+k, the computing device is adapted to determine a parameter value (LocVar), which characterizes a deviation of the samples of the subset (s(j:j+k)) from each other, wherein a local variance of the samples within the subset (s(j:j+k)) is determined as the parameter value (LocVar),
   - and depending on the parameter value (LocVar) to determine at least with respect to one of the samples of the subset (s(j:j+k)), whether or not this sample is affected by interference, wherein depending on the local variance it is determined whether or not the at least one sample of the subset (s(j:j+k)) is affected by interference, wherein the computing device is adapted for comparing the parameter value (LocVar) to a first threshold value (G1),
   - interpreting at least one sample of the subset as affected by the interference if the parameter value (LocVar) is greater than the first threshold value (G1),
   - **characterized by** adjusting the first threshold value (G1) and a second threshold value (G2) in the operation of the radar sensor (5, 6) by means of the computing device, wherein the alteration of the currently adjusted first threshold value (G1) and second threshold value (G2) is effected on condition that the parameter value (LocVar) is smaller than the currently adjusted first threshold value (G1 and on condition that the parameter value (LocVar) is smaller than the second threshold value (G2), which is smaller than the first threshold value (G1).

13. Motor vehicle (1) including a driver assistance device (2) according to claim 12.

**Patentansprüche**

1. Verfahren zur Detektion von Störungen in einem Empfangssignal (s), empfangen durch einen Radarsensor (5, 6) eines Kraftfahrzeugs (1) mittels einer elektronischen Datenverarbeitungsvorrichtung des Kraftfahrzeugs (1), wobei zum Detektieren eines Zielobjekts (12) in einer Umgebung des Kraftfahrzeugs (1) ein Sendesignal umfassend eine Sequenz von aufeinander folgenden frequenzmodulierten Chirp-Signalen mittels des Radarsensors (5, 6) gesendet wird und ein auf dem Zielobjekt (12) reflektiertes Echosignal durch den Radarsensor (5, 6) als das Empfangssignal (s) mit der überlagerten Störung empfangen wird, wobei nach Empfangen des Empfangssignals (s) durch den Radarsensor (5, 6) die Störung in dem Chirp-Signal des Empfangssignals (s) detektiert wird, wobei von den Empfangssignalen der gleichen Frequenz eine Empfangsmatrix bereitgestellt wird, in der die Abtastwerte der Chirp-Signale des Empfangssignals angezeigt werden, wobei die Zeilen der Empfangsmatrix alle Abtastwerte eines einzelnen Chirp-Signals umfassen, wobei die einzelnen Zeilen der Empfangsmatrix dann nacheinander verarbeitet werden:

   - wobei ein Wert j eingesetzt wird, der von 1 bis N-k inkrementiert wird, wobei N die Anzahl von Abtastwerten innerhalb einer Zeile der Empfangsmatrix bezeichnet und k eine voreingestellte Konstante ist,
   - wobei zum Detektieren der Störung innerhalb einer Teilmenge (s(j:j+k)) von Abtastwerten eines Chirp-Signals des Empfangssignals (s) von j bis j+k ein Parameterwert (LocVar) bestimmt wird, der eine Abweichung der Abtastwerte der Teilmenge (s(j:j+k)) voneinander charakterisiert, wobei eine lokale Varianz der Abtastwerte innerhalb der Teilmenge (s(j:j+k)) als der Parameterwert (LocVar) bestimmt wird,
   - und dass in Abhängigkeit vom Parameterwert (LocVar) zumindest bezüglich eines der Abtastwerte der Teilmenge (s(j:j+k)) bestimmt wird, ob der Abtastwert durch die Störung beeinflusst wird oder nicht, wobei in Abhängigkeit von der lokalen Varianz bestimmt wird, ob der zumindest eine Abtastwert der Teilmenge (s(j:j+k)) durch die Störung beeinflusst wird oder nicht, wobei der Parameterwert (LocVar) mit einem ersten Schwellenwert (G1) verglichen wird,
   - wobei zumindest ein Abtastwert der Teilmenge als durch die Störung beeinflusst interpretiert wird, wenn der Parameterwert (LocVar) größer als der erste Schwellenwert (G1) ist,
   - **dadurch gekennzeichnet, dass** der erste Schwellenwert (G1) und ein zweiter Schwellenwert (G2) beim Betrieb des Radarsensors (5, 6) mittels der Datenverarbeitungsvorrichtung angepasst werden, wobei die Änderung des aktuell angepassten ersten Schwellenwerts (G1) und des zweiten Schwellenwerts (G2) unter der Bedingung, dass der Parameterwert (LocVar) kleiner als der aktuell angepasste erste Schwellenwert (G1) ist, und unter der Bedingung, dass der Parameterwert (LocVar) kleiner als der zweite Schwellenwert (G2) ist, der kleiner als der erste Schwellenwert (G1) ist, beeinflusst wird.

2. Verfahren nach Anspruch 1,
   **dadurch gekennzeichnet, dass**
   die Anpassung des ersten Schwellenwerts (G1) beim Betrieb in Abhängigkeit vom Empfangssignal (s) durchgeführt wird.

3. Verfahren nach einem der vorhergehenden Ansprüche, **dadurch gekennzeichnet, dass**
   die Anpassung des ersten Schwellenwerts (G1) beim Betrieb in Abhängigkeit von den Abtastwerten der Teilmenge (s(j:j+k)) durchgeführt wird.

4. Verfahren nach einem der vorhergehenden Ansprüche,
   **dadurch gekennzeichnet, dass**
   die Anpassung des ersten Schwellenwerts (G1) beim Betrieb in Abhängigkeit vom Parameterwert (LocVar) durchgeführt wird.

5. Verfahren nach einem der vorhergehenden Ansprüche,
   **dadurch gekennzeichnet, dass**
   der zweite Schwellenwert (G2) ebenfalls beim Betrieb des Radarsensors (5, 6) in Abhängigkeit vom Empfangssignal (s), vorzugsweise in Abhängigkeit vom Parameterwert (LocVar) angepasst wird.

6. Verfahren nach einem der vorhergehenden Ansprüche,
   **dadurch gekennzeichnet, dass**
   die zwei Schwellenwerte (G1, G2) in Abhängigkeit von einem gemeinsamen Zwischenwert (ZV) angepasst werden.

7. Verfahren nach einem der vorhergehenden Ansprüche,

**dadurch gekennzeichnet, dass**
der erste Schwellenwert (G1) aus einem Zwischenwert (ZV) durch Multiplikation dieses Zwischenwerts (ZV) mit einer Variablen (x) berechnet wird.

8. Verfahren nach einem der vorhergehenden Ansprüche,
**dadurch gekennzeichnet, dass**
der zweite Schwellenwert (G2) aus einem Zwischenwert (ZV) durch Multiplikation dieses Zwischenwerts (ZV) mit einer Variablen (y) berechnet wird.

9. Verfahren nach einem der Ansprüche 6 bis 8, **dadurch gekennzeichnet, dass** der neue Zwischenwert aus der folgenden Gleichung resultiert:

$$\mathtt{ZV = a \cdot LocVar + (1 - a) \cdot ZV',}$$

wobei ZV den neuen Zwischenwert bezeichnet, ZV' den vorherigen Zwischenwert bezeichnet, LocVar die lokale Varianz bezeichnet und a eine Konstante ist.

10. Verfahren nach einem der vorhergehenden Ansprüche,
**dadurch gekennzeichnet, dass**
unterschiedliche Teilbereiche (A bis G) eines gesamten azimutalen Sichtfelds (9, 10) des Radarsensors (5, 6) nacheinander durch den Radarsensor (5, 6) detektiert werden, und dass der erste Schwellenwert (G1), insbesondere der Zwischenwert (ZV), für jeden der Teilbereiche (A bis G) individuell angepasst wird.

11. Verfahren nach einem der vorhergehenden Ansprüche,
**dadurch gekennzeichnet, dass**
das Verfahren auf mehrere Teilmengen (s(j:j+k)) von Abtastwerten des Chirp-Signals und/oder auf mehrere Chirp-Signale der gleichen Sequenz angewendet wird.

12. Fahrerassistenzvorrichtung (2) für ein Kraftfahrzeug (1), umfassend einen Radarsensor (5, 6), ausgebildet zum Emittieren eines Sendesignals, umfassend eine Sequenz von aufeinander folgenden frequenzmodulierten Chirp-Signalen, und zum Empfangen eines Echosignals, wobei das Echosignal auf einem Zielobjekt (12) reflektiert wird, als ein Empfangssignal (s) mit einer überlagerten Störung zum Detektieren des Zielobjekts (12) in einer Umgebung des Kraftfahrzeugs (1), und umfassend eine elektronische Datenverarbeitungsvorrichtung, angepasst zum Detektieren der Störung in den Chirp-Signalen des Empfangssignals (s), wobei aus den Empfangssignalen der gleichen Sequenz eine Empfangsmatrix bereitgestellt wird, in der die Abtastwerte der Chirp-Signale des Empfangssignals angezeigt werden, wobei die Zeilen der Empfangsmatrix jeweils alle Abtastwerte eines einzelnen Chirp-Signals umfassen, wobei die einzelnen Zeilen der Empfangsmatrix dann nacheinander verarbeitet werden:

- wobei ein Wert j eingesetzt wird, der von 1 bis N-k inkrementiert wird, wobei N die Anzahl von Abtastwerten innerhalb einer Zeile der Empfangsmatrix bezeichnet und k eine voreingestellte Konstante ist,
- wobei für die Detektion der Störung innerhalb einer Teilmenge (s(j:j+k)) von Abtastwerten eines Chirp-Signals des Empfangssignals (s) von j bis j+k die Datenverarbeitungsvorrichtung angepasst ist, einen Parameterwert (LocVar) zu bestimmen, der eine Abweichung der Abtastwerte der Teilmenge (s(j:j+k)) voneinander charakterisiert, wobei eine lokale Varianz der Abtastwerte innerhalb der Teilmenge (s(j:j+k)) als der Parameterwert (LocVar) bestimmt wird,
- und in Abhängigkeit vom Parameterwert (LocVar) zumindest bezüglich eines der Abtastwerte der Teilmenge (s(j:j+k)) zu bestimmen, ob der Abtastwert durch die Störung beeinflusst wird oder nicht, wobei in Abhängigkeit von der lokalen Varianz bestimmt wird, ob der zumindest eine Abtastwert der Teilmenge (s(j:j+k)) durch die Störung beeinflusst wird oder nicht, wobei die Datenverarbeitungsvorrichtung zum Vergleichen des Parameterwerts (LocVar) mit einem ersten Schwellenwert (G1) angepasst ist,
- Interpretieren zumindest eines Abtastwerts der Teilmenge als durch die Störung beeinflusst, wenn der Parameterwert (LocVar) größer als der erste Schwellenwert (G1) ist,
- **gekennzeichnet durch** Anpassen des ersten Schwellenwerts (G1) und eines zweiten Schwellenwerts (G2) beim Betrieb des Radarsensors (5, 6) mittels der Datenverarbeitungsvorrichtung, wobei die Änderung des aktuell angepassten ersten Schwellenwerts (G1) und des zweiten Schwellenwerts (G2) unter der Bedingung, dass der Parameterwert (LocVar) kleiner als der aktuell angepasste erste Schwellenwert (G1) ist, und unter der Bedingung, dass der Parameterwert (LocVar) kleiner als der zweite Schwellenwert (G2) ist, der kleiner als der erste Schwellenwert (G1) ist, beeinflusst wird.

**13.** Kraftfahrzeug (1) umfassend eine Fahrerassistenzvorrichtung (2) nach Anspruch 12.

**Revendications**

**1.** Procédé de détection d'interférence dans un signal reçu (s) reçu par un capteur radar (5, 6) d'un véhicule à moteur (1) au moyen d'un dispositif informatique électronique du véhicule à moteur (1), dans lequel pour détecter un objet cible (12) dans un environnement du véhicule à moteur (1) un signal émis comportant une séquence de signaux chirps modulés en fréquence consécutifs est émis au moyen du capteur radar (5, 6) et un signal d'écho réfléchi sur l'objet cible (12) est reçu par le capteur radar (5, 6) comme signal reçu (s) avec l'interférence superposée, dans lequel après la réception du signal reçu (s) par le capteur radar (5, 6), l'interférence dans les signaux chirps du signal reçu (s) est détectée, dans lequel à partir des signaux reçus de la même séquence, une matrice de réception est fournie, dans laquelle les échantillons des signaux chirps du signal reçu sont indiqués, dans lequel les lignes de la matrice de réception comportent chacune tous les échantillons d'un même signal chirp, dans lequel les lignes de la matrice de réception sont ensuite traitées l'une après l'autre ;

- dans lequel une valeur j est appliquée, laquelle est incrémentée de 1 à to N-k, N désignant le nombre d'échantillons dans une ligne de la matrice de réception et k étant une constante prédéfinie,
- dans lequel pour détecter l'interférence dans un sous-ensemble (s(j:j+k)) d'échantillons d'un signal chirp du signal reçu (s) de j to j+k, une valeur paramétrique (LocVar) est déterminée, laquelle caractérise un écart des échantillons du sous-ensemble (s(j:j+k)) les uns des autres, dans lequel une variance locale des échantillons dans le sous-ensemble (s(j:j+k)) est déterminée comme la valeur paramétrique (LocVar),
- et en fonction de la valeur paramétrique (LocVar) au moins relativement à un des échantillons du sous-ensemble (j:j+k)) il est déterminé que cet échantillon est affecté ou non par une interférence, dans lequel en fonction de la variation locale il est déterminé que l'au moins un échantillon du sous-ensemble (s(j:j+k)) est affecté ou non par une interférence, dans lequel la valeur paramétrique (LocVar) est comparée à une première valeur limite (G1),
- au moins un échantillon du sous-ensemble est interprété comme étant affecté par l'interférence si la valeur paramétrique (LocVar) est supérieure à la première valeur limite (G1),
- **caractérisé par** l'ajustement de la première valeur limite (G1) et d'une seconde valeur limite (G2) dans le fonctionnement du capteur radar (5, 6) au moyen du dispositif informatique, dans lequel la modification de la première valeur limite (G1) et de la seconde valeur limite (G2) présentement ajustées est effectuée à condition que la valeur paramétrique (LocVar) soit inférieure à la première valeur limite (G1) présentement ajustée et à condition que la valeur paramétrique (LocVar) soit inférieure à la seconde valeur limite (G2), laquelle est inférieure à la première valeur limite (G1).

**2.** Procédé selon la revendication 1,
**caractérisé en ce que**
l'ajustement de la première valeur limite (G1) dans le fonctionnement est réalisé en fonction du signal reçu (s).

**3.** Procédé selon l'une des revendications précédentes,
**caractérisé en ce que**
l'ajustement de la première valeur limite (G1) dans le fonctionnement est réalisé en fonction des échantillons du sous-ensemble (s(j:j+k)).

**4.** Procédé selon l'une des revendications précédentes,
**caractérisé en ce que**
l'ajustement de la première valeur limite (G1) dans le fonctionnement est réalisé en fonction de la valeur paramétrique (LocVar).

**5.** Procédé selon l'une des revendications précédentes,
**caractérisé en ce que**
la seconde valeur limite (G2) est aussi ajustée dans l'opération du capteur radar (5, 6) en fonction du signal reçu (s), de préférence en fonction de la valeur paramétrique (LocVar).

**6.** Procédé selon l'une des revendications précédentes,
**caractérisé en ce que**
les deux valeurs limites (G1, G2) sont ajustées en fonction d'une valeur intermédiaire commune (ZV).

**7.** Procédé selon l'une des revendications précédentes, **caractérisé en ce que** la première valeur limite (G1) est calculée à partir d'une valeur intermédiaire (ZV) par multiplication de cette valeur intermédiaire (ZV) par une variable (x).

**8.** Procédé selon l'une des revendications précédentes, **caractérisé en ce que** la seconde valeur limite (G2) est calculée à partir d'une valeur intermédiaire (ZV) par multiplication de cette valeur intermédiaire (ZV) par une variable (y).

**9.** Procédé selon une des revendications 6 à 8, **caractérisé en ce que** la nouvelle valeur intermédiaire résulte de l'équation :

$$ZV = a \cdot LocVar + (1-a) \cdot ZV',$$

dans laquelle ZV désigne la nouvelle valeur intermédiaire, ZV' désigne la valeur intermédiaire précédente, LocVar désigne la variance locale et a est une constante.

**10.** Procédé selon l'une des revendications précédentes,
**caractérisé en ce que**
différentes plages partielles (A à G) d'un champ de vision azimut général total (9, 10) du capteur radar (5, 6) sont détectées l'une après l'autre par le capteur radar (5, 6) et la première valeur limite (G1), en particulier la valeur intermédiaire (ZV), est ajustée individuellement pour chacune des plages partielles (A à G).

**11.** Procédé selon l'une des revendications précédentes,
**caractérisé en ce que**
le procédé est appliqué à une pluralité de sous-ensembles (s(j:j+k)) d'échantillons du signal chirp et/ou à une pluralité de signaux chirp de la même séquence.

**12.** Dispositif d'aide à la conduite (2) pour un véhicule à moteur (1), comportant un capteur radar (5, 6) formé pour émettre un signal émis comportant une séquence de signaux chirps modulés en fréquence consécutifs et pour recevoir un signal d'écho, ledit signal d'écho étant réfléchi sur un objet cible (12), en tant que signal reçu (s) avec une interférence superposée pour détecter l'objet cible (12) dans un environnement du véhicule à moteur (1), et comportant un dispositif informatique électronique adapté pour détecter l'interférence dans les signaux chirps du signal reçu (s), dans lequel à partir des signaux reçus de la même séquence, une matrice de réception est fournie, dans laquelle les échantillons des signaux chirps du signal reçu sont indiqués, dans lequel les lignes de la matrice de réception comportent chacune tous les échantillons d'un même signal chirp, dans lequel les lignes de la matrice de réception sont ensuite traitées l'une après l'autre :

- dans lequel une valeur j est appliquée, laquelle est incrémentée de 1 à to N-k, N désignant le nombre d'échantillons dans une ligne de la matrice de réception et k étant une constante prédéfinie,
- dans lequel pour détecter l'interférence dans un sous-ensemble (s(j:j+k)) d'échantillons d'un signal chirp du signal reçu (s) de j à j+k, le dispositif informatique est adapté pour déterminer une valeur paramétrique (LocVar), laquelle caractérise un écart des échantillons du sous-ensemble (s(j:j+k)) les uns des autres, dans lequel une variance locale des échantillons dans le sous-ensemble (s(j:j+k)) est déterminée comme la valeur paramétrique (LocVar),
- et en fonction de la valeur paramétrique (LocVar) déterminer au moins relativement à un des échantillons du sous-ensemble (j:j+k)) que cet échantillon est affecté ou non par une interférence, dans lequel en fonction de la variation locale il est déterminé que l'au moins un échantillon du sous-ensemble (s(j:j+k)) est affecté ou non par une interférence, dans lequel le dispositif informatique est adapté pour comparer la valeur paramétrique (LocVar) à une première valeur limite (G1),
- interpréter qu'au moins un échantillon du sous-ensemble est affecté par l'interférence si la valeur paramétrique (LocVar) est supérieure à la première valeur limite (G1),
- **caractérisé par** l'ajustement de la première valeur limite (G1) et d'une seconde valeur limite (G2) dans le fonctionnement du capteur radar (5, 6) au moyen du dispositif informatique, dans lequel la modification de la première valeur limite (G1) et de la seconde valeur limite (G2) présentement ajustées est effectuée à condition que la valeur paramétrique (LocVar) soit inférieure à la première valeur limite (G1) présentement ajustée et à condition que la valeur paramétrique (LocVar) soit inférieure à la seconde valeur limite (G2), laquelle est inférieure à la première valeur limite (G1).

**13.** Véhicule à moteur (1) comportant un dispositif d'aide à la conduite (2) selon la revendication 12.

Fig.1

$$\begin{bmatrix} s(1,1) & s(1,2) & s(1,3) & \cdots & s(1,N) \\ s(2,1) & s(2,2) & s(2,3) & & \\ s(3,1) & s(3,2) & s(3,3) & & \\ s(4,1) & s(4,2) & s(4,3) & & \\ \vdots & & & \ddots & \\ s(I,1) & & & & s(I,N) \end{bmatrix}$$

## Fig.2

Fig.3

Fig.4

$$\begin{bmatrix} 0 & 0 & 0 & 1 & 2 & 3 & 4 & 0 & \ldots & 0 \\ 1 & 2 & 3 & 4 & 5 & 0 & 0 & 1 & \ldots & 0 \\ 0 & 0 & 0 & 0 & 1 & 0 & 0 & 1 & \ldots & 0 \\ \ldots & \ldots & \ldots & \ldots & \ldots & \ldots & \ldots & \ldots & \ldots & 5 \\ 1 & 2 & 3 & 0 & 0 & 1 & 2 & 3 & \ldots & 0 \end{bmatrix}$$

Fig.5

$$\begin{bmatrix} 0 & 0 & 0 & 0 & 0 & 0 & 0 & 0 & \ldots & 0 \\ 1 & 2 & 3 & 4 & 5 & 6 & 7 & 0 & \ldots & 0 \\ 0 & 0 & 0 & 0 & 0 & 0 & 0 & 0 & \ldots & 0 \\ \ldots & \ldots & \ldots & \ldots & \ldots & \ldots & \ldots & \ldots & \ldots & 0 \\ 0 & 0 & 0 & 0 & 0 & 0 & 0 & 0 & \ldots & 0 \end{bmatrix}$$

Fig.6

$$\begin{bmatrix} 0 & 0 & 0 & 0 & 0 & 0 & 0 & 0 & \ldots & 0 \\ 0 & 0 & 0 & 1 & 2 & 3 & 4 & 0 & \ldots & 0 \\ 0 & 0 & 0 & 0 & 1 & 2 & 3 & 4 & \ldots & 0 \\ \ldots & \ldots & \ldots & \ldots & \ldots & \ldots & \ldots & \ldots & \ldots & 0 \\ 0 & 0 & 0 & 1 & 2 & 0 & 0 & 0 & \ldots & 0 \end{bmatrix}$$

Fig.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102009057191 A1
- US 20060125682 A1
- US 6094160 A
- US 6121918 A
- US 20110291875 A1
- US 20080231497 A1